# EUROPEAN PATENT SPECIFICATION

(11) **EP 2 994 597 B1**
(45) Date of publication and mention of the grant of the patent: **30.05.2018**
(21) Application number: 14795113.1
(22) Date of filing: 30.04.2014
(51) Int. Cl.: E21B 7/08, E21B 4/00, E21B 17/02, F16D 3/20, F16D 3/38

(54) **STEERING-JOINT DEVICE FOR A ROCK DRILLING MACHINE**
LENKVERBINDER FÜR EINE GESTEINSBOHRMASCHINE
DISPOSITIF DE JOINT DE DIRECTION POUR UNE PERFORATRICE DE ROCHES

(30) Priority: 10.05.2013 NO 20130668
(43) Date of publication of application: 16.03.2016
(73) Proprietor: Norhard AS, 4441 Tonstad (NO)
(72) Inventor: HAUGHOM, Sigurd Kjell, N-4440 Tonstad (NO)
(74) Representative: Håmsø Patentbyrå AS
(86) International application number: PCT/NO2014/050068
(87) International publication number: WO 2014/182175

(56) References cited:
- EP-A1- 1 857 631
- GB-A- 2 368 361
- US-A1- 2007 251 726
- US-A1- 2012 037 428
- US-B1- 6 216 802

## Description

A steering-joint device arranged between a string section and a drilling section in a rock-drilling machine is described, the steering-joint including a universal-joint cross supported in the string section and the drilling section, pivotal around first and second pivot axes, and the universal-joint cross being provided with a first control arm supported in the string section and a second control arm supported in the drilling section. During drilling in rock, when a drilling portion is connected to a drill string extending through a borehole to a driving device on the outside, it is necessary to be able to steer the drilling portion in the desired direction. From the applicant's own patent NO 326032 and patent application NO 20082644 it is known how a rock-drilling machine with a rotatable drill bit arranged at an end portion of a non-rotatable drill string can be controlled directionally by there being a steering joint arranged between a drilling portion and a string portion, and there being control cylinders, arranged radially, connected to the steering joint.

By providing a pilot hole of a substantially smaller diameter than the diameter of the final borehole that is to be established, it will be possible to reveal the quality of the bedrock in order thereby to take the necessary measures before the final borehole is established. While the final borehole may typically have a diameter of 80 cm, it is desirable to drill a pilot hole with a diameter of approximately 15 cm. With a diameter that small, it is desirable to provide a lateral control of a different kind to that described in the prior art. An alternative area of application of a borehole with the relatively small diameter mentioned is as a permanent path for passing cables, fluid etc.

From EP 1857631 A1, a directional-control drilling system is known, including a nonrotating tool which is provided with anchoring means and is connected to a nonrotating conveyance system, a drill bit connected to a motor and a directional-control system arranged between the tool and the drill bit and arranged to displace the drill bit away from the centre axis of the borehole. An axially displaceable orientation sleeve, which is rotatable around its own axis, is provided with a slanted cut-out that forms a support for a control arm. A support of the middle portion of the control arm allows the control arm to be slanted in any direction by axial displacement and rotation of the orientation sleeve. GB 2368361 A discloses a similar directional-control drilling system. US 6216802 B1 describes an apparatus for orienting a drilling assembly, in which a control system includes a rotatable and axially displaceable orientation sleeve with a slanted centre opening for the passage of a jointed drill-bit driveshaft.

The invention has for its object to remedy or reduce at least one of the drawbacks of the prior art or at least provide a useful alternative to the prior art.

The object is achieved through features, which are specified in the description below and in the claims that follow.

A rock-drilling machine is provided with a steering joint connecting a drilling section and a string section. The steering joint is arranged to transfer a torque and an axial force and is formed as a universal-joint cross supported in the drilling section and the string section, pivotal around first and second pivot axes. The first pivot axis is preferably perpendicular to the second pivot axis and both pivot axes are preferably perpendicular to the centre axis of the rock-drilling machine. The universal joint is provided with a first control arm extending into the string section and a second control arm extending into the drilling section, an end portion of each control arm being supported in an axially displaceable and non-rotatable steering sleeve. Each of the steering sleeves is preferably connected to a linear actuator. The support of the control arms is slidably arranged in a centre cut-out with a slanted axial direction, the steering sleeve of the string section having an axial direction which is perpendicular to the pivot axis of the universal joint through the string section, and the steering sleeve of the drilling section having an axial direction which is perpendicular to the pivot axis of the universal joint through the drilling section.

When the steering sleeve is displaced axially relative to the support of the control arm, the respective drilling or string section is pivoted around its pivot axis in the steering joint and the angle between said sections changes. The angular change during the displacement of the steering sleeve of the drilling section lies in a plane perpendicular to the angular change provided by a displacement of the steering sleeve of the string section, and the result is that the drilling section may be adjusted to any angle relative to the string section within the area that is practically usable, typically ±2° in any radial direction.

The linear actuator may be formed of an electric or hydraulic motor provided with a threaded spindle engaged in the steering sleeve. Rotation of the threaded spindle results in an axial displacement of the steering sleeve.

The linear actuator is preferably provided with a position indicator. The position indicator is advantageously formed as a sensor rod projecting into a centre opening in the threaded spindle and being in signal communication with a remote control unit. One or more indicator elements is/are fixed in or near the centre opening and arranged to provide machine-readable signals corresponding to the axial position of the sensor rod in the threaded spindle.

The invention relates, more specifically, to a steering-joint device arranged between a string section and a drilling section in a rock-drilling machine, the steering joint including a universal-joint cross supported in the string section and the drilling section, pivotal around first and second pivot axes, and the universal-joint cross being provided with a first control arm supported in the string section and a second control arm supported in the drilling section, characterized by
an end portion of each of the control arms being pivotally arranged in, respectively, first and second control-arm bearings in a slanted centre cut-out in an axially displaceable steering sleeve,
the steering sleeve of the string section having an axial direction that is perpendicular to the pivot axis of the universal-joint cross through the string section and is slanted relative to the pivot axis of the universal-joint cross through the drilling section, and the steering sleeve of the drilling section having an axial direction that is perpendicular to the pivot axis of the universal-joint cross through the drilling section and is slanted relative to the pivot axis of the universal-joint cross through the string section.

Each of the steering sleeves may be connected to a linear actuator.

Each of the steering sleeves may be connected to a linear actuator formed as a motor provided with a threaded spindle which is in engagement with a nut portion arranged in the steering sleeve. The motor may be an electric asynchronous motor or a permanent-magnet synchronous motor (PMSM).

Each of the linear actuators may have an associated position indicator arranged for remote-reading the axial position of the steering sleeve.

The position indicator may include a sensor rod, which is attached to the steering sleeve and projects into a centre bore in the threaded spindle, and one or more indicator elements may be arranged in or at the centre bore.

In what follows, an example of a preferred embodiment is described, which is visualized in the accompanying drawings, in which:
- Figure 1: shows a rock-drilling machine according to the invention in perspective;
- Figure 2: shows a steering joint in the rock-drilling machine on a larger scale;
- Figure 3: shows an axial section, on a larger scale, through the steering joint in a plane coinciding with a second pivot axis in a universal joint; and
- Figure 4: shows an axial section through the steering joint in a plane that coin-cides with a first pivot axis of the universal joint.

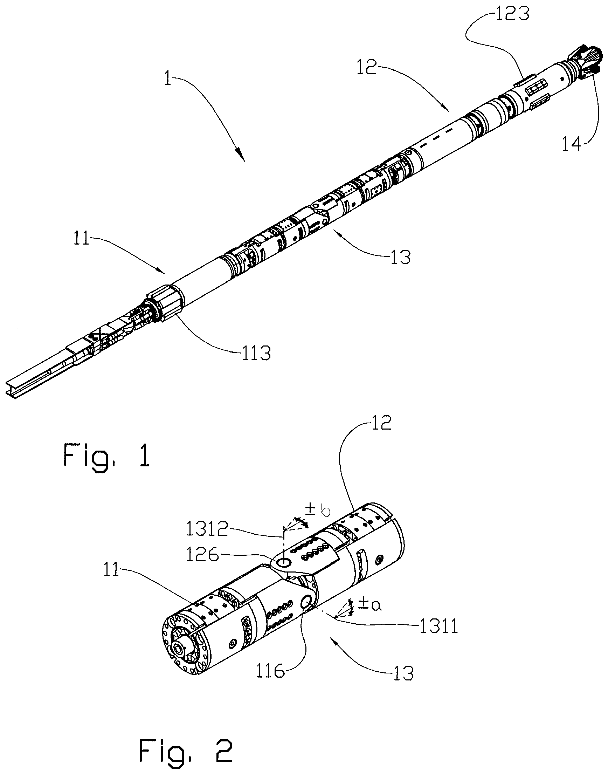

Reference is first made to figure 1, in which the reference numeral 1 indicates a rock-drilling machine including an extendable string section 11 and a drilling section 12, the string section 11 and the drilling section 12 being interconnected by means of a steering joint 13, which is arranged to transmit a torque provided around the centre axis of the rock-drilling machine 1. At an end portion, the drilling section 12 is provided with a rotatable drill bit 14 in a manner known *per* se*.* The string section 11 and the drilling section 12 are each provided with supports 113, 123 encircling the respective section 11, 12 and being arranged to rest supportingly against a borehole wall (not shown). Directional control of the drilling machine 1 is provided by angling the steering joint 13 around its pivot axes 1311, 1312 (see the more detailed description below), the string section 11 and the drilling section 12 rocking on their supports 113, 123.

Reference is now made to figure 2, which shows the steering joint 13 and the adjacent portions of the string section 11 and drilling section 12. The steering joint 13 is supported in the string section 11 in a first pair of universal-joint bearings 116 (only one is shown), pivotal over an angle ±a around a first pivot axis 1311. Further, the steering joint 13 is supported in the drilling section 12 in a second universal bearing 126 (only one is shown), pivotal over an angle ±b around a second pivot axis 1312.

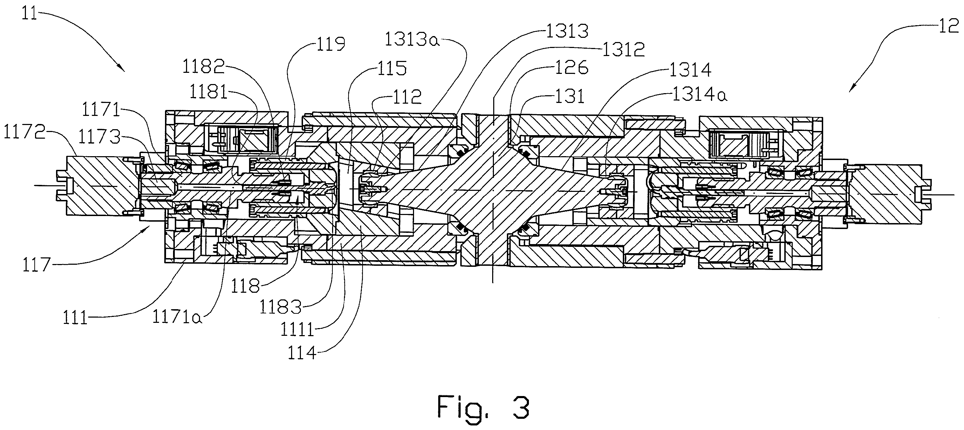

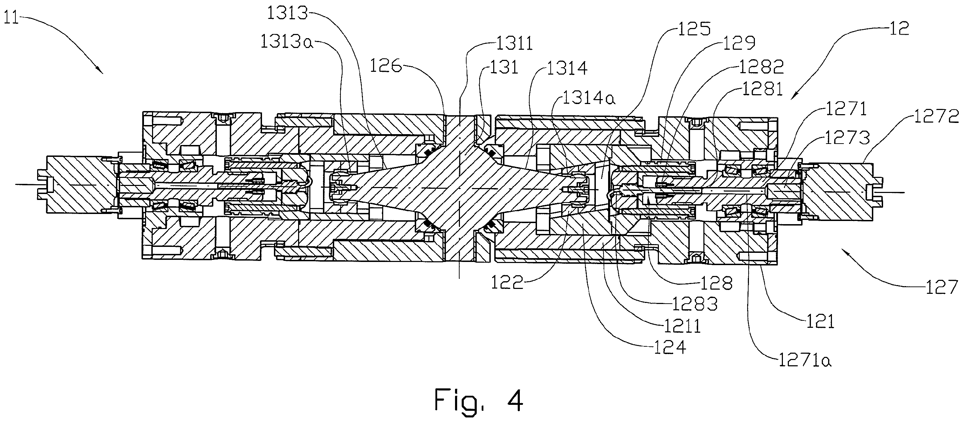

Reference is now made to figure 3, in which, primarily, the details of the string section 11 are identified by their reference numerals. A string-section housing 111 (in the figure, only an end portion is shown) encloses a steering sleeve guide 1111 and is provided with first universal-joint bearings 116 (see figures 2 and 4) formed in peripheral lugs projecting in the axial direction towards the drilling section 12. A universal-joint cross 131, which is supported in a manner known *per se* in the first universal-joint bearings 116, is provided with a flexurally rigid first control arm 1313 projecting in the axial direction into the string section 11. An end portion 1313a of said control arm 1313 is pivotally attached to a first control-arm bearing 112 slidably arranged in a centre cut-out 115 in a first steering sleeve 114. The longitudinal axis of the centre cut-out 115 is perpendicular to the first pivot axis 1311 of the universal-joint cross 131 and is slanted relative to the second pivot axis 1312 of the universal-joint cross 131. Said steering sleeve 114 is arranged in an axially displaceable manner in the steering sleeve guide 1111 of the string section 11 by means of an associated first linear actuator 117.

Said linear actuator 117 is formed as a motor 1172, typically a hydraulic or electric motor, in particular an electric asynchronous motor or a PMSM, attached in a rotationally rigid manner to the string-section housing 111 and connected in a rotationally rigid manner by a driveshaft 1173 to a threaded spindle 1171, which is in rotatable engagement with a nut portion 119 on the steering sleeve 114.

A position indicator 118 is arranged in association with said steering sleeve 114. An advantageous embodiment is shown in figure 3, in which a sensor rod 1181 is attached to a portion of the steering sleeve 114 and projects with a free end portion in the axial direction into a centre bore 1171a in the threaded spindle 1171. The threaded spindle 1171 is provided with at least one indicator element 1182 attached at the mouth of the centre bore 1171a. When the steering sleeve 114 is being displaced, a signal is generated in the sensor rod 1181 according to the position of the sensor rod 1181 relative to the indicator element 1182, and the signal is transmitted through a sensor line 1183 to a remote control unit (not shown).

Reference is now made to figure 4, in which, correspondingly, primarily the details of the drilling section 12 are identified by their reference numerals. A drilling-section housing 121 (in the figure, only an end portion is shown) encloses a steering sleeve guide 1121 and is provided with a second universal-joint bearing 126 formed in peripheral lugs projecting in the axial direction towards the string section 11. The universal-joint cross 131, which is supported in a manner known *per se* in the second universal-joint bearings 126, is provided with a flexurally rigid second control arm 1314 projecting in the axial direction into the drilling section 12. An end portion 1314a of said control arm 1314 is pivotally attached to a second control-arm bearing 122 slidably arranged in a centre cut-out 125 in a second steering sleeve 124. The longitudinal axis of centre cut-out 125 is perpendicular to the second pivot axis 1312 of the universal-joint cross 131 (see figures 2 and 3) and is slanted relative to the first pivot axis 1311 of the universal-joint cross 131. Said steering sleeve 124 is arranged in an axially displaceable manner in the steering sleeve guide 1211 of the drilling section 12 by means of an associated second linear actuator 127.

Said linear actuator 127 is formed as a motor 1272, typically a hydraulic or electric motor, especially an electric asynchronous motor or a PMSM, fixed in a rotationally rigid manner in the drilling-section housing 121 and rotationally rigidly connected by a drive shaft 1273 to a threaded spindle 1271, which is in rotatable engagement with a nut portion 129 on the steering sleeve 124.

A position indicator 128 is arranged in association with said steering sleeve 124. An advantageous embodiment is shown in figure 4, in which a sensor rod 1281 is attached to a portion of the steering sleeve 124 and projects with a free end portion in the axial direction into a centre bore 1271a in the threaded spindle 1271. The threaded spindle 1271 is provided with at least one indicator element 1282 attached at the mouth of the centre bore 1271a. When the steering sleeve 124 is being displaced, a signal is generated in the sensor rod 1281 according to the position of the sensor rod 1281 relative to the indicator element 1282, and the signal is transmitted through a sensor line 1283 to the remote control unit (not shown).

When the work direction of the rock-drilling machine 1 is to be changed, this is done, in principle, in the following way (here, only pivoting around the first pivot axis 1311 of the steering joint 13 is described):
The steering sleeve 114 of the string section 11 is moved by means of the first linear actuator 117 relative to the respective control-arm bearing 112 in a prescribed direction. Because of the slant of the centre cut-out 115 the control-arm bearing 112 is displaced sideways, and the universal-joint cross 131 is pivoted around its first pivot axis 1311, and the opposite control arm 1313 which projects into the steering sleeve 124 of the drilling section 12 forces the drilling section 12 to be pivoted around the first pivot axis 1311 over an angle a.

Correspondingly, the drilling section may be pivoted around the second pivot axis 1312 by a displacement of the second steering sleeve 124 in a prescribed direction.

By a combined operation of both the linear actuators 117, 127, any angling of the drilling section 12 relative to the string section 11 is achieved within the deflection limitations given by the geometry of the steering joint 13 and the associated steering sleeves 114, 124 and the linear actuators 117, 127 and also the difference between the diameters of the string- and drilling-section housings 111, 121 and that of the borehole, that is to say the diameter of the drill bit 14. The maximum pivot angles a and b on the pivot axes 1311, 1312 are typically ±2°.

## Claims

1. A steering-joint device (13) arranged between a string section (11) and a drilling section (12) in a rock-drilling machine (1), the steering joint (13) including a universal-joint cross (131) supported in the string section (11) and the drilling section (12), pivotal around a first and a second pivot axis (1311, 1312), and the universal-joint cross (131) being provided with a first control arm (1313) supported in the string section (11) and a second control arm (1314) supported in the drilling section (12), wherein an end portion (1313a, 1314a) of each of the control arms (1313, 1314) is pivotally arranged in, respectively, a first and a second control-arm bearing (112, 122) in a slanted centre cut-out (115, 125) in an axially displaceable steering sleeve (114, 124), the steering sleeve (114) of the string section (11) having an axial direction which is perpendicular to the pivot axis (1311) of the universal-joint cross (131) through the string section (11) and is slanted relative to the pivot axis (1312) of the universal-joint cross (131) through the drilling section (12), and the steering sleeve (124) of the drilling section (12) having an axial direction which is perpendicular to the pivot axis (1312) of the universal-joint cross (131) through the drilling section (12) and is slanted relative to the pivot axis (1311) of the universal-joint cross (131) through the string section (11).

2. The device in accordance with claim 1, wherein each of the steering sleeves (114, 124) has an associated linear actuator (117, 127).

3. The device in accordance with claim 1, wherein each of the steering sleeves (114, 124) is connected to a linear actuator (117 and 127, respectively) formed as a motor (1172 and 1272, respectively), provided with a threaded spindle (1171, 1271) which is engaged in a nut portion (119 and 129, respectively) arranged in the steering sleeve (114, 124).

4. The device in accordance with claim 3, wherein the motor (1172, 1272) is an electric asynchronous motor or a PMSM (permanent-magnet synchronous motor).

5. The device in accordance with claim 3, wherein each of the linear actuators (117, 127) has an associated position indicator (118 and 128, respectively) arranged to remotely read the axial position of the steering sleeve (114 and 124, respectively).

6. The device in accordance with claim 5, wherein the position indicator (118, 128) includes a sensor rod (1181, 1281 which is attached to the steering sleeve (114, 124) and projects into a centre bore (1171a, 1271a) in the threaded spindle (1171, 1271) and one or more indicator elements (1182, 1282) are arranged in or at the centre bore (1171a, 1271a).

## Patentansprüche

1. Eine Lenkgelenk-Vorrichtung (13), welche zwischen einem Strangabschnitt (11) und einem Bohrabschnitt (12) in einer Gesteinsbohrmaschine (1) angeordnet ist, wobei das Lenkgelenk (13) ein Zapfenkreuz (131) aufweist, welches im Strangabschnitt (11) und im Bohrabschnitt (12) gehalten ist, und schwenkbar um eine erste und eine zweite Drehachse (1311, 1312) angeordnet ist, und wobei das Zapfenkreuz (131) einen ersten Steuerarm (1313) aufweist, welcher im Strangabschnitt (11) gehalten ist, und einen zweiten Steuerarm (1314) aufweist, der im Bohrabschnitt (12) gehalten ist, wobei ein Endbereich (1313a, 1314a) eines jeden der Steuerarme (1313, 1314) schwenkbar in einer ersten bzw. einer zweiten Steuerarmhalterung (112, 122) in einer schrägen Aussparung (115, 125) in einer axial verschiebbaren Lenkhülse (114, 124) angeordnet ist, wobei die Lenkhülse (114) des Strangabschnittes (11) eine axiale Richtung aufweist, welche quer zur Drehachse (1311) des Zapfenkreuzes (131) durch den Strangabschnitt (11) hindurch angeordnet ist und schräg zur Drehachse (1312) des Zapfenkreuzes (131) durch den Bohrabschnitt (12) hindurch angeordnet ist, und wobei die Lenkhülse (124) des Bohrabschnittes (12) eine axiale Richtung aufweist, welche quer zur Drehachse (1312) des Zapfenkreuzes (131) durch den Bohrabschnitt (12) hindurch angeordnet ist und schräg zur Drehachse (1311) des Zapfenkreuzes (131) durch den Strangabschnitt (11) hindurch angeordnet ist.

2. Vorrichtung gemäss Anspruch 1, wobei jede der Lenkhülsen (114, 124) einen damit verbundenen Linearaktor (117, 127) aufweist.

3. Vorrichtung gemäss Anspruch 1, wobei jede der Lenkhülsen (114, 124) mit einem Linearaktor (117 bzw. 127) verbunden ist, welcher als Motor (1172 bzw. 1272) ausgebildet ist, aufweisend eine Gewindespindel (1171, 1271), welche in einem Bereich einer Mutter (119 bzw. 129) in der Lenkhülse (114, 124) angeordnet ist.

4. Vorrichtung gemäss Anspruch 3, wobei der Motor (1172, 1272) ein elektrischer Asynchronmotor oder ein PMSM (Permanentmagnet-Synchron-Motor) ist.

5. Vorrichtung gemäss Anspruch 3, wobei jeder der Linearaktoren (117, 127) einen damit verbundenen Positionsindikator (118 bzw. 128) aufweist, welcher angeordnet ist, um die axiale Position der Lenkhülse (114 bzw. 124) von weitem abzulesen.

6. Vorrichtung gemäss Anspruch 5, wobei der Positionsindikator (118, 128) einen Sensorstab (1181, 1281) aufweist, welcher an der Lenkhülse (114, 124) befestigt ist und in eine zentrale Ausnehmung (1171a, 1271a) in der Gewindespindel (1171, 1271) hinein ragt, und wobei ein oder mehrere Indikatorelemente (1182, 1282) in oder an der zentralen Ausnehmung (1171a, 1271a) angeordnet sind.

## Revendications

1. Un dispositif de joint de direction (13) disposé entre une section de train de tiges (11) et une section de forage (12) dans une perforatrice de roches (1), le joint de direction (13) incluant un croisillon de cardan (131) soutenu dans la section de train de tiges (11) et la section de forage (12), pouvant pivoter autour d'un premier et second axe pivot (1311, 1312), et le croisillon de cardan (1311, 1312) étant doté d'un premier bras de suspension (1313) soutenu dans la section de train de tiges (11) et un second bras de suspension (1314) soutenu dans la section de forage (12), dans lequel une partie d'extrémité (1313a, 1314a) de chacun des bras de suspension (1313, 1314) est respectivement disposée de façon pivotante dans un premier et second palier de bras de suspension (112, 122) dans une découpe centrale inclinée (115, 125) dans un tube de direction axialement déplaçable (114, 124), le tube de direction (114) de la section de train de tiges (11) ayant une direction axiale qui est perpendiculaire à l'axe pivot (1311) du croisillon de cardan (131) à travers la section de train de tiges (11) et est incliné par rapport à l'axe pivot (1312) du croisillon de cardan (131) à travers la section de forage (12), et le tube de direction (124) de la section de forage (12) ayant une direction axiale qui est perpendiculaire à l'axe pivot (1312) du croisillon de cardan (131) à travers la section de forage (12) et est incliné par rapport à l'axe pivot (1311) du croisillon de cardan (131) à travers la section de train de tiges (11).

2. Le dispositif selon la revendication 1, dans lequel chacun des tubes de direction (114, 124) comporte un actionneur linéaire (117, 127) associé.

3. Le dispositif selon la revendication 1, dans lequel chacun des tubes de direction (114, 124) est connecté à un actionneur linéaire (117 et 127, respectivement), formé en tant que moteur (1172 et 1272, respectivement), muni d'un fuseau de filetage (1171, 1271) qui est engagé dans une partie écrou (119 et 129, respectivement) disposée dans le tube de direction (114, 124).

4. Le dispositif selon la revendication 3, dans lequel le moteur (1172, 1272) est un moteur asynchrone électrique ou un PMSM (moteur synchrone à aimant permanent).

5. Le dispositif selon la revendication 3, dans lequel chacun des actionneurs linéaires (117, 127) comporte un indicateur de position (118 et 128, respectivement) associé, disposé pour une lecture à distance de la position axiale du tube de direction (114 et 124, respectivement).

6. Le dispositif selon la revendication 5, dans lequel l'indicateur de position (118, 128) inclut une tige capteur (1181, 1281) qui est attachée au tube de direction (114, 124) et fait saillie dans un alésage central (1171a, 1271a) dans le fuseau de filetage (1171, 1271) et un ou plusieurs éléments indicateurs (1181, 1282) sont disposés dans, ou au niveau de, l'alésage central (1171a, 1271a).
